# EUROPEAN PATENT APPLICATION

(11) **EP 4 641 975 A1**
(43) Date of publication of application: **29.10.2025**
(21) Application number: 23910392.2
(22) Date of filing: 22.12.2023
(51) Int. Cl.: H04L 9/40, G06F 21/62

(54) **SERVICE ACCESS METHOD AND SERVICE ACCESS APPARATUS**

(30) Priority: 30.12.2022 CN 202211734070
(71) Applicant: Shenzhen Yinwang Intelligent Technologies Co., Ltd., Shenzhen, Guangdong 518110 (CN)
(72) Inventor: ZHANG, Li, Shenzhen, Guangdong 518129 (CN); WEI, Zhuo, Shenzhen, Guangdong 518129 (CN); HONG, Jiaqi, Shenzhen, Guangdong 518129 (CN); LIU, Yifeng, Shenzhen, Guangdong 518129 (CN)
(74) Representative: MERH-IP Matias Erny Reichl Hoffmann Patentanwälte PartG mbB
(86) International application number: PCT/CN2023/140989
(87) International publication number: WO 2024/140466

(57) **Abstract**

This application provides a service access method and a service access apparatus. According to the service access method in this application, a security level relationship between a service caller and a service provider is used as a secure service access condition based on a predefined service security level, so that a requirement for updating the secure service access condition when a service dynamically changes can be reduced. Further, according to the service access method in this application, an attack can be prevented by configuring a trust condition of the service, and a quick dynamic response may be implemented after the attack, to prevent the attack from spreading and enhance network security resilience.

## Description

This application claims priority to Chinese Patent Application No. 202211734070.0, filed with the China National Intellectual Property Administration on December 30, 2022 and entitled "SERVICE ACCESS METHOD AND SERVICE ACCESS APPARATUS", which is incorporated herein by reference in its entirety.

### TECHNICAL FIELD

This application relates to the field of information security technologies, and in particular, to a service access method and a service access apparatus.

### BACKGROUND

With intelligentization and networking of vehicles, service oriented architectures (service oriented architectures, SOAs) are introduced in the vehicles. A service system in the SOA architecture may include a plurality of service parties, and one or more services may be deployed on each service party. Services on different service parties may perform secure access based on access permission between the services, to implement corresponding service requirements. Access between the services may also be referred to as calling between the services.

In the service system in the SOA architecture, a method for performing secure calling between services on different service parties based on access permission between the services is as follows: An access control policy of each service party is deployed on the service party, where the access control policy on each service party may generally indicate specific services on specific service parties that can access each service on the service party; and after receiving an access request, the service on each service party may determine a specific service on a specific service party from which the access request comes, and determine, based on the deployed access control policy, whether the access is allowed.

However, due to an openness feature of the SOA architecture, service change requirements such as new services, service permission changes, and dynamic service generation often occur. In this case, to ensure that the service system can provide normal secure service access, an access control policy on a service party on which all services related to a service with a changed service requirement are located needs to be updated. This method for updating the access control policy has low efficiency and high costs.

### SUMMARY

This application provides a service access method and a service access apparatus, to reduce a requirement for updating a policy library in time in an SOA architecture, and prevent attacks such as spoofing and hijacking in a service calling process.

According to a first aspect, this application provides a service access method. The service access method is applied to a first service party, a first service is deployed on the first service party, and the method includes: The first service party receives a first access request from a second service party, where the first access request indicates that a second service requests to access the first service and indicates a security level of the second service, and the second service is deployed on the second service party; and when determining, based on the first access request, that the second service and the first service meet a preset secure service access condition, the first service party allows the second service to access the first service, where the secure service access condition includes: a security level of a service access party is higher than or equal to a security level of a service provider.

In the method, a relationship between the security level of the service access party and the security level of the service provider is used as the secure service access condition. When the service dynamically changes, only the security level of the service needs to be set, thereby reducing complexity of updating the secure service access condition.

In some implementations, the secure service access condition further includes a first trust condition associated with the second service, the first trust condition includes: one or more services in a call chain in which the second service accesses the first service are trusted, and the service in the call chain includes the first service, the second service, and/or a third service.

The first trust condition associated with the second service is added to the secure service access condition, so that an attack that occurs in a service calling process can be discovered and effectively prevented, and service access security can be improved.

Optionally, the first access request carries signature information of the service. That the service is trusted includes: verification of the signature information of the service succeeds.

It may be understood that the signature information of the service is the first trust condition, and the trust condition may alternatively use other information.

In some implementations, the service access method further includes: When the second service does not meet the first trust condition, the first service party adds a second trust condition associated with the second service to the secure service access condition, and lowers a trust level of the second service, where the second trust condition includes: a check report of a running-state control flow is trusted; and
the first service party sends first information to the second service party, where the first information indicates the second service party to add, when the second service party resends the first access request, information required for verifying the second trust condition.

Optionally, when the second service does not meet the first trust condition, the first service party sends second information to the second service party, where the second information indicates the second service party to restart the second service or lower the security level of the second service.

Different feedback information may be selected based on whether the security level of the second service can be modified. A similarity of the feedback information is that the feedback information can be used to prevent an attack from spreading, implement a fast dynamic response, and enhance cyber security resilience of an overall architecture.

In some implementations, the first access request further indicates a service type of the second service, and the secure service access condition further includes: a service type associated with the service provider includes a service type associated with a service caller.

The relationship between the service type of the service access party and the service type of the service provider may also be used as the secure service access condition. When the service dynamically changes, only the service type of the service needs to be set, so that a requirement for updating the secure service access condition can be reduced.

In some implementations, the first access request further indicates an access type of the second service.

The secure service access condition further includes: an access type that can be provided by the service provider for the service access party includes an access type requested by the service access party.

The access type that the service provider can provide for the service access party can be used as an additional secure service access condition to prevent an attack during service calling.

According to a second aspect, a service access method provided in this application is applied to a second service party, a second service is deployed on the second service party, and the method includes: The second service party sends a first access request to a first service party, where the first access request indicates that the second service requests to access a first service and indicates a security level of the second service, and the first service is deployed on the second service party.

Optionally, the first access request carries signature information of the second service.

In some implementations, the service access method further includes: The second service party receives first information from the first service party, where the first information indicates the second service party to add, when the second service party resends the first access request, information required for verifying a second trust condition.

Optionally, the service access method further includes: The second service party receives second information from the first service party, where the second information indicates the second service party to restart the second service or lower the security level of the second service.

In some implementations, the first access request further indicates a service type of the second service.

In some implementations, the first access request further indicates an access type of the second service.

According to a third aspect, this application provides a service access apparatus. The service access apparatus includes function modules configured to implement any service access method mentioned in the foregoing implementations. Optionally, each module may be implemented by using software and/or hardware.

According to a fourth aspect, this application provides a vehicle. The vehicle includes the service access apparatus in the foregoing implementation.

According to a fifth aspect, this application provides a computer-readable storage medium, where the computer-readable storage medium stores computer-executable instructions, and when the computer-executable instructions are executed by a processor, the service access method provided in the foregoing implementations is implemented.

According to a sixth aspect, this application provides a computer program product, including a computer program. When the computer program is executed by a processor, any service access method mentioned in the foregoing implementations is implemented.

According to the service access method and the service access apparatus provided in this application, in a service-oriented architecture, services are divided based on a predefined service security level, and service calling access control is implemented based on a basic policy, thereby reducing a requirement for updating a policy in time in an access control policy library. In this application, the service type may be further set for the service. This application further proposes to configure the trust condition for the service, so that attacks such as a service start point being spoofed and a service calling intermediate node being hijacked can be prevented based on the trust condition. When verification of the trust condition fails, the security level or trust level of the service caller is adjusted to effectively prevent the attack from spreading, implement quick dynamic response, and enhance the security and resilience of the service system.

### BRIEF DESCRIPTION OF DRAWINGS

The accompanying drawings herein are incorporated into this specification and constitute a part of this specification, to show embodiments in accordance with this application, and are used, together with this specification, to explain the principle of this application.
FIG. 1 is a diagram of performing static access control based on identity and access management according to an embodiment of this application;
FIG. 2 is a diagram of an in-vehicle service call chain according to an embodiment of this application;
FIG. 3 is a flowchart of a service access method according to an embodiment of this application;
FIG. 4 is a diagram of a service access model in which a service security level cannot be modified in a vehicle-mounted service-oriented architecture according to an embodiment of this application;
FIG. 5 is a diagram of a service access model in which a service security level can be modified in a vehicle-mounted service-oriented architecture according to an embodiment of this application;
FIG. 6A is a diagram in which a second service is deployed on a second service party according to an embodiment of this application;
FIG. 6B is a diagram of a local zero-trust access control module according to an embodiment of this application;
FIG. 7A is a diagram in which a first service is deployed on a first service party according to an embodiment of this application;
FIG. 7B is a diagram of a remote zero-trust access control module according to an embodiment of this application;
FIG. 8 is a diagram of a three-domain architecture in a vehicle in which an access control module is deployed according to an embodiment of this application;
FIG. 9 is a diagram of a structure of a service access apparatus according to an embodiment of this application;
FIG. 10 is a diagram of a structure of a service access apparatus according to another embodiment of this application; and
FIG. 11 is a diagram of a structure of a service access apparatus according to still another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to particular embodiments.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, the implementations are merely examples of apparatuses and methods that are described in the appended claims in detail and that are consistent with some aspects of this application.

With intelligence and networking of vehicles, electronic control units (electronic control units, ECUs) need to communicate and interact with each other in a secure and efficient manner. A conventional "signal-oriented" software structure cannot meet a requirement. Therefore, a service-oriented architecture (SOA) is introduced into vehicles.

In a vehicle-mounted SOA architecture, both an application at an upper layer of a vehicle and an atomic operation at a bottom layer of the vehicle are considered as services. The service is a core abstraction means and a basic description unit of a system. A service system in the SOA architecture may include a plurality of service parties, and one or more services may be deployed on each service party. Access between services is also referred to as calling between services. Different service parties communicate and interact with each other through a vehicle-mounted Ethernet protocol (scalable service-oriented middleware over IP protocol, SOME/IP). The SOA architecture makes service-based communication on a vehicle side more flexible and dynamic, but also brings corresponding network security risks.

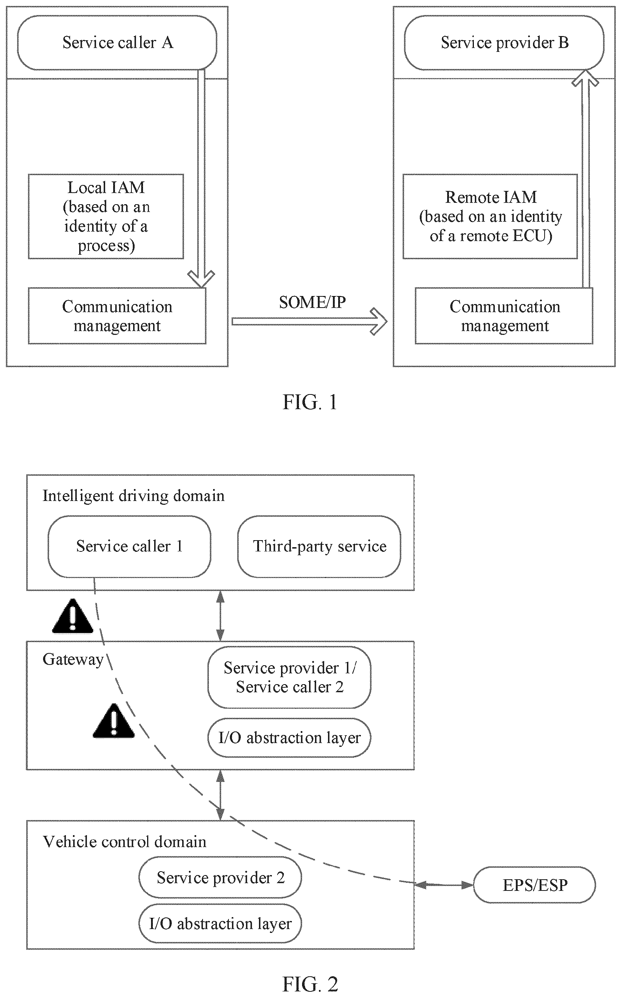

In the SOA architecture, identity and access management (identity and access management, IAM) can be used to manage and control service calling permission. The Automotive Open System Architecture (automotive open system architecture, AUTOSAR) alliance is an alliance established by global automotive manufacturers, component suppliers, and other electronic, semiconductor, and software system vendors. To meet the service calling requirements in the SOA architecture, the AUTOSAR alliance launches a mechanism to implement static access control based on the IAM. FIG. 1 is a diagram in which the AUTOSAR alliance performs static access control based on an IAM. In a vehicle environment, in an application design phase, an object that can be accessed by a service is an intent, and a visited list of the service has been defined and confirmed by a vehicle manufacturer (original equipment manufacturer, OEM).

As shown in FIG. 1, the OEM uses an intent (intent) and a visited list of a service A as a security policy, and a left service party stores the security policy. After a service A sends a calling request, an IAM in the left service party performs checking based on an identity of the service A and the security policy, to ensure that the service calling request is valid. After the authorization succeeds, the request is forwarded to a right service party through SOME/IP. The right service party performs remote IAM checking based on the identity information transferred in the communication to verify whether the request is from a specified transmitter. After the verification succeeds, the service calling request is sent to a corresponding service provider.

However, due to an openness feature of the SOA architecture, service change requirements such as new services, service permission changes, and dynamic service generation often occur. To ensure that the service system can provide normal secure service access, the service access control policy needs to be updated on all service parties related to the service change requirement. In this service access control method, efficiency of updating the access control policy is low, and costs are high.

In addition, the remote service party performs verification only based on the identity of the service party to which a service caller belongs, and cannot identify the service caller in a fine-grained manner. Therefore, the remote service party is vulnerable to identity spoofing attacks of malicious services in the same service party. In addition to identity spoofing attacks that may occur in the same service party, the service access control method cannot solve the hijacking and control that may be encountered by an intermediate node of a call chain for in-vehicle communication.

FIG. 2 is an example chain scenario of in-vehicle communication of service calling. In FIG. 2, an intelligent driving domain, a gateway, and a vehicle control domain are service parties in a vehicle-mounted SOA architecture. A service caller 1 is deployed in the intelligent driving domain, a third-party service is further deployed in the intelligent driving domain, a service provider 1 is deployed in the gateway, a service provider 2 is deployed in the vehicle control domain, and an I/O abstraction layer is a predefined service interface. When the service caller 1 in the intelligent driving domain wants to access the service provider 2 in the vehicle control domain, the intelligent driving domain first sends a first access request to the gateway. In this case, the gateway receives the first access request, and the service provider 1 in the gateway is used as a service provider of the first access request. Then, the gateway sends a second access request to the vehicle control domain. It should be noted that, in this case, the original service provider 1 is used as a service caller 2. The vehicle control domain receives the second access request, and the service provider 2 is used as a service provider of the second access request. The foregoing chain process is a service call chain in which the service caller 1 accesses the service provider 2. The intelligent driving domain is a start point of the service call chain, and the gateway is used as an intermediate node of the service call chain. In this process, the third-party service in the intelligent driving domain may maliciously forge an identity of the service caller 1, and may also be hijacked and controlled at the gateway in the call chain, so that the service calling finally points to an electronic power steering (electronic stability program, ESP) system/electronic power steering (electronic power steering, EPS) system. This poses great risks to vehicle safety.

To resolve the foregoing problem, this application provides a service access method and a service access apparatus, to reduce a requirement for updating a policy library in time in an SOA architecture, and further prevent attacks such as spoofing and hijacking in a service calling process.

A technical concept of this application is as follows: A security level is set for a service, and a security access condition between security levels is set. To be specific, a high-level service can access a low-level service, and access permission between the services is controlled based on the security level of the service and the security access condition.

The security level is set for the service, and the security access condition between the security levels is set. When the service dynamically changes, only the security level of the service needs to be set, thereby reducing complexity of updating the secure service access condition.

This application further proposes to configure a trust condition for the service, and determine the access permission based on the trust condition, to prevent attacks such as spoofing of a service access initiator and hijacking of a service access intermediate node, so as to improve access security.

This application further proposes to set a role for the service, and control the access permission based on consistency between a role of the service caller and a role of the service provider, to improve access security. In this embodiment, the role of the service may also be referred to as a service type.

This application further proposes to set an access type for the service, and control the access permission based on consistency between an access type of the service caller and a type of the service provider, to improve access security.

This application further proposes to adjust a security level or a trust level of the service caller when verification of the trust condition fails, to effectively prevent an attack from spreading, implement a fast dynamic response, and enhance security and resilience of the service system.

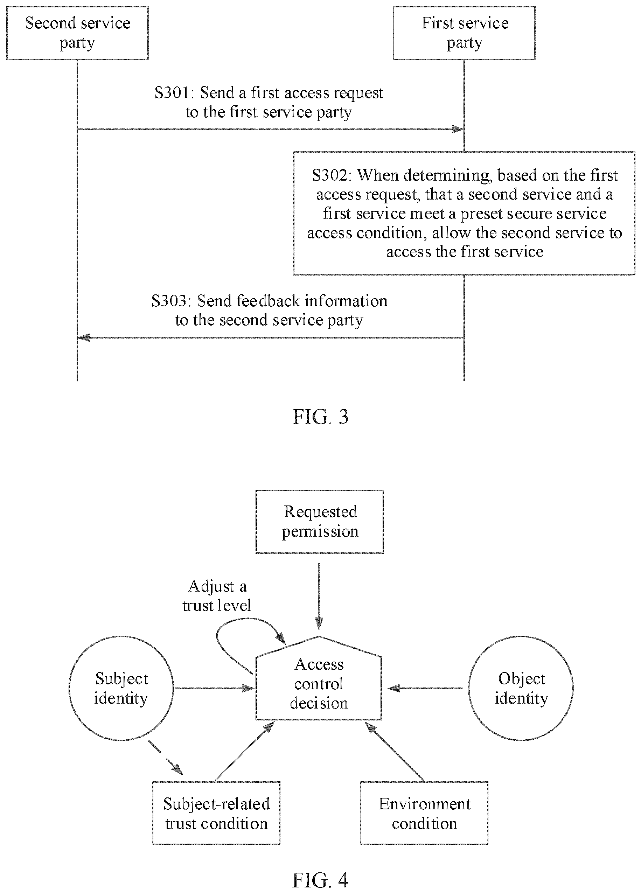

As shown in FIG. 3, an embodiment of this application provides a service access method. The method is applied to a vehicle-mounted service system, for example, may be applied to a vehicle service system of an SOA architecture. A first service party and a second service party are components of the vehicle-mounted service system. A first service is deployed on the first service party, and a second service is deployed on the second service party.

The method may include S301 and S302. Optionally, the method may further include S303.

S301: The second service party sends a first access request to the first service party, where the first access request indicates that the second service accesses the first service and indicates a security level of the second service. Correspondingly, the first service party receives the first access request sent by the second service party.

In this embodiment, the second service is used as a service caller, and the first service is used as a service provider.

In an example, the security level of the second service may be predefined by an OEM of a vehicle.

Optionally, the first access request may further indicate a service type of the second service. In the vehicle-mounted SOA architecture, services may be classified into a series of service types such as a remote diagnosis service, a remote upgrade service, a vehicle body control service, a power control service, and a chassis control service. For example, if the service provider is a related service for reading vehicle speed information, the service provider is a remote diagnosis service.

Optionally, the service type may alternatively be predefined by the OEM of the vehicle.

Optionally, the first access request carries a trust condition related to the second service, and the trust condition may be key-based signature information of the second service, or may be security status information of the second service party.

In some implementations, there is more than one service in a call chain in which the second service accesses the first service. For example, a third service party on which a third service is deployed is an original start point of the service call chain, and the second service party is an intermediate node in the call chain. In this case, the first access request further carries a trust condition related to the third service.

Optionally, the first access request may further indicate an access type used by the second service to access the first service, and the access type may be an operation like reading, writing, or running.

S302: When determining, based on the first access request, that the second service and the first service meet a preset secure service access condition, the first service party allows the second service to access the first service, where the secure service access condition includes: a security level of a service access party is higher than or equal to a security level of the service provider.

In this step, it can be learned from the secure service access condition that the second service is allowed to access the first service only when the security level of the second service is higher than or equal to the security level of the first service.

Optionally, when the first access request further indicates the service type of the second service, the secure service access condition further includes: a service type associated with the service provider includes a service type associated with the service caller. If the service provider is an upper-layer application, the service provider may be associated with a plurality of service types. Therefore, a range of the service type associated with the service provider may be greater than a range of the service type associated with the service caller, and the service type associated with the service provider can match at least the service type associated with the service caller.

Optionally, when the first access request further carries the trust condition related to the second service, the secure service access condition further includes: one or more services in a call chain in which the second service accesses the first service are trusted. When the first access request further carries a trust condition of another service in the call chain, the secure service access condition requires that the plurality of services are trusted.

Optionally, when the first access request further indicates the access type used by the second service to access the first service, the secure service access condition further includes: an access type that can be provided by the service provider for the service access party includes an access type requested by the service access party. The service provider may collect information about an environment condition irrelevant to the service caller, verify whether operation permission requested by the service access party meets operation permission provided by the service provider for the service access party based on the environment condition.

S303: The first service party sends feedback information to the second service party.

In this step, the feedback information indicates different access control results, to trigger a subsequent operation.

In some implementations, the security level of the second service cannot be modified. When the second service does not meet the trust condition in the secure service access condition, the first service party sends, to the second service party, feedback information indicating that verification of the trust condition fails. In addition, the first service party further lowers a stored default trust level of the second service. Therefore, a trust status of the second service is adjusted from a default trusted state to an untrusted state. The feedback information further indicates an additional trust condition that needs to be added when the second service initiates a next access request.

In some implementations, the security level of the second service may be modified. When the second service does not meet the trust condition in the secure service access condition, the first service party sends, to the second service party, feedback information indicating that verification of the trust condition fails, the second service party may lower the security level of the second service or force the second service level to be restarted based on the feedback information, and the security level of the second service whose security level is lowered may be reset after the second service is restarted.

Optionally, when the access type provided by the first service for the second service based on the environment condition does not include the access type requested by the second service, the foregoing subsequent operation initiated based on the feedback information is also applicable.

In this embodiment, the second service party sends the first access request to the first service party, and the first service party determines, based on the information carried in the first access request, whether the second service and the first service meet the secure service access condition, and feeds back access control information to the second service party. The secure service access condition is a reflection of a service access control policy library. Based on a specific setting of the secure service access condition, a basic policy may be designed based on a security level or a service type, to reduce a requirement for updating the policy library, and a trust condition can be used to prevent spoofing and hijacking attacks during calling. The service security level or the trust level is adjusted based on the feedback information, to prevent an attack from spreading, and implement a fast dynamic response.

FIG. 4 is a diagram of a service access model in a vehicle-mounted SOA architecture according to an embodiment of this application. As shown in FIG. 4, in the service access model, a subject is a service caller, and an object is a service provider. An identity of the subject may include a unique identity document (identity document, ID), a security level, and a role in the vehicle. The identity of the subject is a data structure of three-dimensional information based on {ID, security level, role}. The security level and the role are predefined by an OEM. This is similar for an identity of the object. A trust condition is directly related to the subject and is determined by the identity of the subject. The trust condition may be signature information based on a subject key or a subject running-state control flow verification report. An environment condition is another attribute that is not affected by the subject, for example, information such as a vehicle running status, a vehicle location, and a time at which the subject initiates a service call. An access request initiated by the subject to the object may be an operation like reading, writing, or running.

When the subject initiates the access request to the object, an access control determining module first obtains the identity of the subject and the identity of the object. When determining that a security level of the subject is higher than or equal to a security level of the object, the access control determining module performs pre-authorization. Otherwise, the access control determining module rejects the access request of the subject.

Optionally, in the service access model, whether a role type of the subject matches a role type of the object may be further determined. When the role types match, the access control determining module performs pre-authorization. Otherwise, the access control determining module rejects the access request of the subject.

Optionally, after the pre-authorization succeeds, the access control determining module may further verify a trust condition determined based on the identity of the subject. After verification of the trust condition succeeds, the access control determining module completes access authorization of the subject to the object.

Optionally, after verification of the trust condition succeeds, it may be further determined whether operation permission requested by the subject for the object meets an additional policy based on the environment condition. When the operation permission meets the additional policy, the access control determining module completes access authorization of the subject to the object.

In an example, the identity of the subject in FIG. 4 is uniformly signed by the OEM. Therefore, the security level of the subject cannot be modified. In the service access model in which the service security level cannot be modified, the access control determining module stores a trust level of the subject. The trust level is 1 by default, indicating that the subject is in a trusted state. When verification of the trust condition or the environment condition fails, it indicates that a pre-authorization result does not match a trust assessment result. This means that an attack may occur. The access control determining module rejects authorization, and lowers the trust level of the subject. In this case, the trust level of the subject changes from 1 to 0, indicating that the subject is in an untrusted state. When the subject is in the untrusted state, more trust conditions need to be provided, and when verification succeeds, the access control determining module can complete access authorization of the subject to the object. If more trust conditions are provided and verification succeeds, the trust level of the subject is reset to an initial trust level.

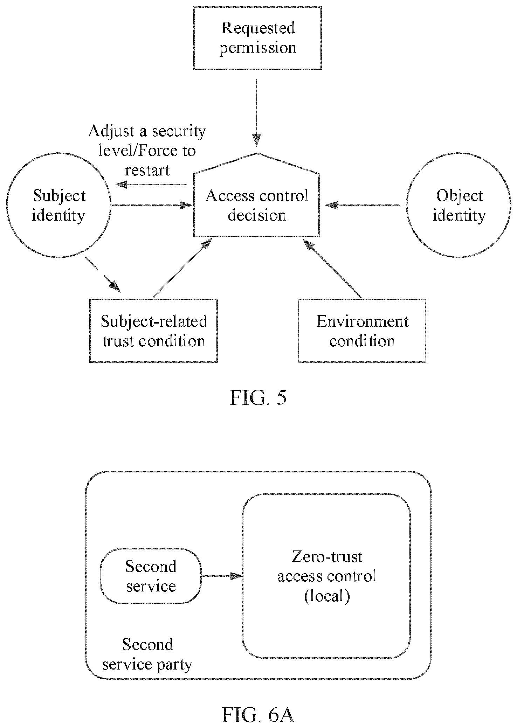

In some implementations, the service security level in the service access model may be modified. As shown in FIG. 5, when the service security level can be modified, if verification of the trust condition or the environment condition fails, the access control determining module feeds back, to the subject, a result indicating that the trust assessment fails. In this case, the security level of the subject may be lowered or the subject may be forced to be restarted. When the security level of the subject is adjusted to be lower than the security level of the object, the subject cannot implement normal service calling. It should be noted that the adjustment of the security level of the subject herein is not permanent. After the subject is restarted, the security level of the subject is restored to the security level before the adjustment.

In this embodiment, the service access model may use, based on the security level and the role predefined by the OEM, a relationship between security levels and/or roles of the subject and the object as the basic policy, and determine whether to perform pre-authorization, thereby reducing a requirement for updating the policy library in time. After a pre-authorization condition is met, further trust assessment may be performed based on the trust condition of the subject and the environment condition, and the trust status or the security level of the subject is adjusted based on a feedback result, to avoid attacks such as spoofing and hijacking that may occur in a process in which the subject calls the object.

In the foregoing embodiment, the overall service system from the service caller to the service provider in the SOA architecture is briefly described. The following describes the service caller and the service provider on a single side.

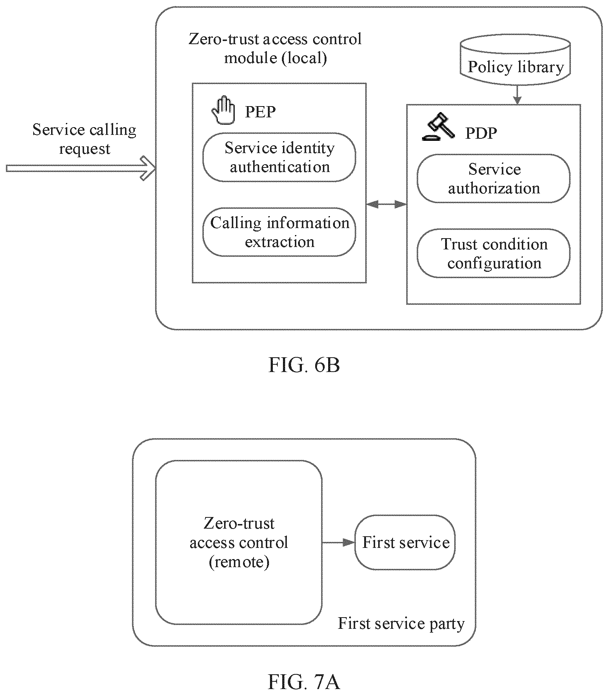

FIG. 6A is a diagram in which a second service is deployed on a second service party according to an embodiment of this application. As shown in FIG. 6A, the second service and a local zero-trust access control module are deployed on the second service party, and zero-trust access control is implemented by using an IAM. Therefore, a diagram of a structure of the local zero-trust access control module is shown in FIG. 6B. The local zero-trust access control module includes a policy decision point (policy decision point, PDP), a policy enforcement point (policy enforcement point, PEP), and a policy library. The PDP represents a logical point for making an access control decision. The PDP may determine, based on the policy library, whether a service is allowed to execute a requested task. The PEP represents a logical point for executing the access control decision. The PEP directly communicates with the corresponding PDP to receive the access control decision. Both the PDP and the PEP are submodules in the zero-trust access control module.

The service access method provided in this application is applied to the second service party. When the second service needs to call the first service, the second service sends a service calling request, where the service calling request indicates an identity of the second service, an identity of the first service, and an access type of a second service request. The identity of the second service may include a unique ID of the second service in a vehicle, a predefined security level, and a service type. This is similar to the identity of the first service.

In the second service party, the PEP module in the local zero-trust access control module intercepts the service calling request, and extracts calling information of the service, that is, the identity of the second service, the identity of the first service, and the access type of the second service request. Service identity authentication may be performed based on the identity information of the second service. The PEP module transfers the extracted calling information to the PDP module.

After receiving the calling information, the PDP module compares the security level of the second service with the security level of the first service, and performs verification based on a basic policy in the policy library. For example, if the security level of the second service is higher than the security level of the first service, the policy verification succeeds, and service authorization is performed on the calling request of the second service. Optionally, the PDP module may further verify, based on the basic policy in the policy library, whether the service type of the second service matches the service type of the first service.

Optionally, after performing service authorization, the PDP module may further configure a trust condition based on the security level and/or the service type of the second service.

The second service party may use the service calling request and the trust condition related to the second service as a first access request, and transfer, through the SOME/IP, the service calling request and the trust condition related to the second service to the first service party on which the first service is deployed.

Optionally, the second service party is further configured to receive feedback information sent by the first service party. When the feedback information indicates that verification of the trust condition fails, if the security level of the second service can be modified, the second service party lowers the security level of the second service or forces the second service to be restarted; or if the security level of the second service cannot be modified, the second service party adds, based on the feedback information, a required additional trust condition related to the second service when the second service party resends the first access request.

In this embodiment, the second service party implements zero-trust access control by using the IAM, and first checks, in the local PDP module, whether the second service and the first service meet the preset secure service access condition, to quickly reject service calling when the secure service access condition is not met, so as to improve a feedback speed of the service system. The second service party may further receive the feedback information from the first service party to perform a corresponding operation, to implement a quick dynamic response.

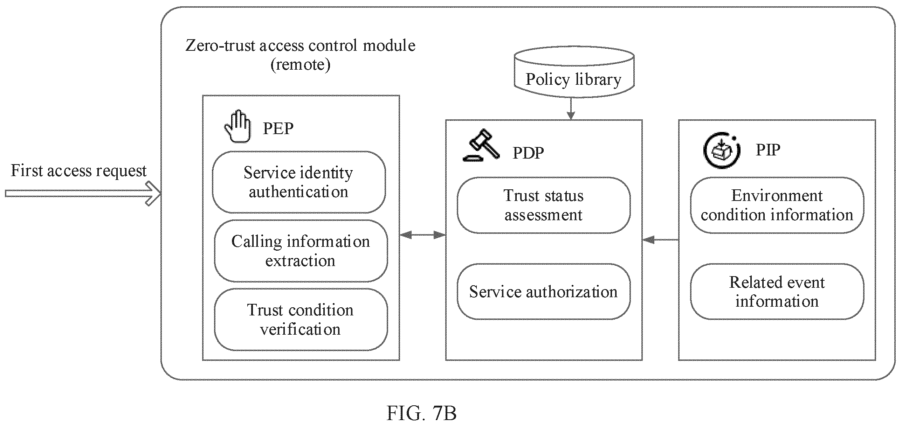

FIG. 7A is a diagram in which a first service is deployed on a first service party according to an embodiment of this application. As shown in FIG. 7A, the first service and a remote zero-trust access control module are deployed on the first service party, and zero-trust access control is implemented by using an IAM. Therefore, a diagram of a structure of the remote zero-trust access control module is shown in FIG. 7B. The remote zero-trust access control module includes a PEP module, a PDP module, a policy information collection point (policy information point, PIP), and a policy library. The PIP mainly helps collect environment condition information and related event information and transfer the environment condition information and the related event information to the PDP module. The PIP is also a submodule in the zero-trust access control module.

In the first service party, the PEP module in the remote zero-trust access control module intercepts a first access request from the second service party, where the first access request indicates that the second service accesses the first service and indicates an identity of the second service, an identity of the first service, and an access type of a second service request. The PEP module extracts calling information from the first access request, and performs service identity authentication based on the identity information of the second service. The PEP module transfers the extracted calling information to the PDP module.

After receiving the calling information, the PDP module compares a security level of the second service with a security level of the first service, and performs verification based on a basic policy in the policy library. For example, if the security level of the second service is higher than the security level of the first service, the policy verification succeeds. Optionally, the PDP module may further verify, based on the basic policy in the policy library, whether a service type of the second service matches a service type of the first service.

Optionally, after the policy verification succeeds, the PDP module may perform pre-authorization on the second service to access the first service. If the pre-authorization fails, an access request is quickly rejected, and rejection information is fed back to the second service party. If the pre-authorization succeeds, the PDP module transfers pre-authorization success information to the PEP module.

After receiving the information indicating that the pre-authorization succeeds, the PEP module performs verification based on a trust condition carried in the first access request. If the second service party is an original start point in a call chain in which the access of the second service to the first service is located, the PEP module only needs to verify the trust condition related to the second service. If the second service party is an intermediate node in the call chain in which the access of the second service to the first service is located, the PEP module not only needs to verify the trust condition related to the second service, but also needs to verify a trust condition related to another service on the call chain. For example, a fourth service party on which a fourth service is deployed is an original start point of the call chain, and a third service party on which a third service is deployed is between the fourth service party and the second service party, and is also an intermediate node on the call chain. In this case, the PEP module needs to verify trust conditions related to the fourth service to the second service. It should be noted that, for some service providers with low security levels, the PEP module does not need to verify a trust condition of a service on the service call chain. In some implementations, the trust condition may be signature information of the service, and the trust condition verification is to verify the signature information of the service. The PEP module transfers a verification result of the trust condition to the PDP module.

The PDP module performs trust assessment based on the policy in the policy library and the environment condition information and the verification result of the trust condition that are received from the PIP module. The PDP module performs service authorization on access of the second service to the first service only when the trust assessment succeeds. Regardless of whether service authorization is performed, the PEP module feeds back the access control decision of the PDP to the second service party.

Optionally, when the trust assessment fails, if the security level of the second service can be modified, the feedback information of the PEP module indicates the second service party to lower the security level of the second service or force the second service to be restarted; or if the security level of the second service cannot be modified, the first service party lowers a default trust level of the second service, and the feedback information of the PEP module indicates that the second service party needs to add, when the second service party resends the first access request, an additional trust condition related to the second service.

In this embodiment, the first service party implements zero-trust access control by using the IAM, intercepts the first access request by using the PEP module in the remote zero-trust access control module, and extracts the calling information. The PDP module checks whether the second service and the first service meet a preset secure service access condition, and determines whether to perform service pre-authorization, to reduce a requirement for updating the policy library in time. The PEP module continues to perform trust condition verification after the service pre-authorization. The PDP module performs trust assessment based on a check result, and feeds back information to the second service party based on the trust assessment, to effectively prevent an attack from occurring on the service call chain and prevent the attack from spreading.

The foregoing embodiments describe specific implementations in which the service access method provided in this application is applied to the service caller and the service provider in the SOA architecture. The following describes application of the service access method in the SOA architecture with reference to a three-domain architecture in a vehicle.

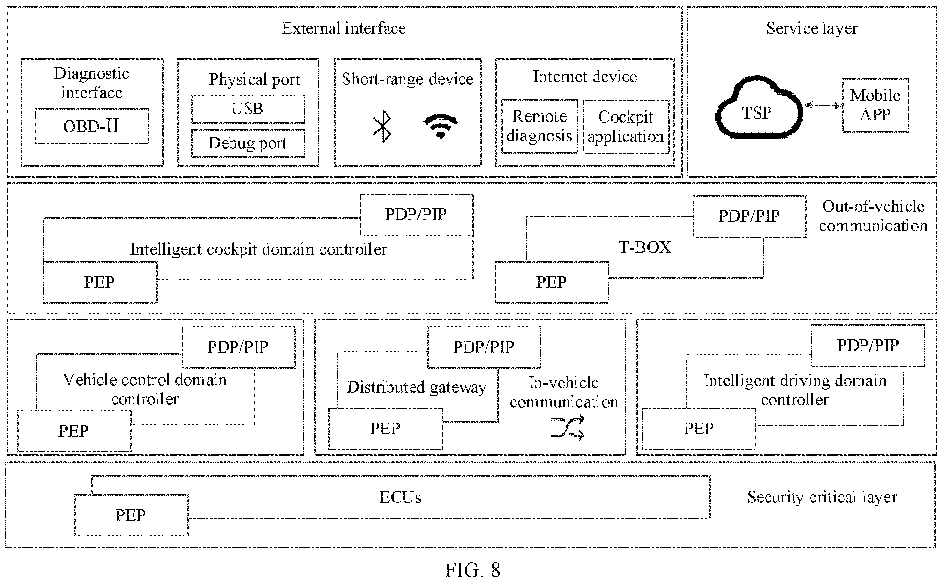

FIG. 8 is a diagram of a three-domain architecture in a vehicle in which an access control module is deployed according to an embodiment of this application. As shown in FIG. 8, in an AUTOSAR adaptive platform (adaptive platform, AP) architecture, a mainstream three-domain architecture includes an intelligent cockpit domain, an intelligent driving domain, and a vehicle control domain. Access control submodules such as a PEP, a PDP, and a PIP are deployed on a domain controller and a distributed gateway with abundant resources. However, only PEPs are deployed on security critical (security critical) bottom-layer ECUs such as an EPS and an ESP on weak devices with insufficient resources, and the distributed gateway or the domain controller helps make a service access control decision.

The vehicle shown in FIG. 8 is an intelligent connected vehicle, uses an SOA architecture. Remote control and remote diagnosis on the vehicle may be implemented through a 4G/5G interface of a vehicle-mounted T-BOX. For example, the T-BOX receives an out-of-vehicle control/diagnosis signal, and the signal requests to call a service on the distributed gateway. A corresponding application runs in the T-BOX system to process the signal, and converts the signal into a corresponding service calling request. The T-BOX sends the service calling request to an in-vehicle computing platform. After performing corresponding processing, the in-vehicle computing platform generates a new service calling request and sends the new service calling request to the distributed gateway. After the distributed gateway succeeds in secure service access condition verification, the distributed gateway allows the corresponding service to be called. The distributed gateway may be a vehicle integration unit (vehicle integrated/integration unit, VIU). From receiving the signal by the T-BOX to allowing, by the distributed gateway, the service to be called, a service call chain from the T-BOX to the in-vehicle computing platform and then to the VIU is formed. In the service call chain, the T-BOX is an original start point of the service call chain, the corresponding application in the T-BOX system is a service caller, the in-vehicle computing platform is an intermediate node in the service call chain, and a corresponding application on the in-vehicle computing platform is used as a service provider, and is also used as a service caller that initiates service calling to the VIU.

Herein, an example in which the in-vehicle computing platform is a second service party and the VIU is a first service party is used for description. For example, a control processing application is deployed on the in-vehicle computing platform. The application is used to process a vehicle door unlocking service request sent by the T-BOX, and generate a new service calling request used to access the VIU. A predefined security level of the control processing application is 4, a service type of the control processing application belongs to a vehicle body control service, and the control processing application is a second service. A vehicle door unlocking service is deployed on the VIU. A predefined security level of the vehicle door unlocking service is 4, a service type of the vehicle door unlocking service belongs to the vehicle body control service, and the vehicle door unlocking service is a first service.

The control processing application on the in-vehicle computing platform generates a new service calling request, where the service calling request includes identities of the control processing application and the vehicle door unlocking service. The PEP module on the in-vehicle computing platform intercepts the service calling request and extracts calling information. The PEP module transfers the extracted calling information to the PDP module. The PDP module compares and determines the calling information based on a basic policy in a policy library. Because the security level of the control processing application is 4, the security level of the vehicle door unlocking service is 4, and both the first service and the second service belong to the vehicle body control service, policy verification succeeds on the in-vehicle computing platform. If either the security levels or the service types do not match, the vehicle door unlocking service on the VIU cannot be called. For example, a remote diagnosis service whose security level is also 4 cannot call the vehicle door unlocking service on the VIU. The PDP module may configure a trust condition based on the security level and the service type of the control processing application. Herein, information about the service call chain, namely, a signature of the control processing application on the in-vehicle computing platform, is used as the trust condition. The in-vehicle computing platform uses the new service calling request and the signature of the control processing application as a first access request, and transfers the first access request to the VIU through an SOME/IP. It should be noted that, because the in-vehicle computing platform is the intermediate node in the service call chain, the first access request further carries a signature of the remote control application in the T-BOX.

A message type of a header (header) of the SOME/IP is used as a flag of an access control message. For convenient and quick processing, service access request information and service access feedback information may be defined as different message types. For example, the service access request information is 0x51, and corresponds to "Q" in an ASCII table, and the service access feedback information may be defined as 0x52, and corresponds to "R" in the ASCII table. A payload (payload) of the SOME/IP includes an identity of the service caller, the trust condition, an identity of the service provider, and access type information. The information is stored in the payload in a Tag-Length-Value format.

The PEP module in the VIU intercepts the first access request sent by the in-vehicle computing platform, extracts the calling information from the first access request, performs authentication based on an identity of the control processing application, and transfers the extracted calling information to the PDP module in the VIU. After receiving the calling information, the PDP module compares the security level of the control processing application with the security level of the vehicle door unlocking service, determines whether the service type of the control processing application matches that of the vehicle door unlocking service, and performs verification based on the basic policy in the policy library. After the policy verification succeeds, the PDP module may perform pre-authorization on the control processing application to access the vehicle door unlocking service. If the pre-authorization fails, the access request is quickly rejected and fed back to the in-vehicle computing platform. If the pre-authorization succeeds, the PDP module transfers pre-authorization success information to the PEP module. After receiving the pre-authorization success information, the PEP module performs verification based on the trust condition carried in the first access request. Because the T-BOX is the calling start point of the service chain, the PEP module needs to verify the signature of the remote control application in the T-BOX and the signature of the control processing application on the in-vehicle computing platform. After verification of the two signatures succeeds, it indicates that a global service calling scenario is complete, and the trust condition verification succeeds. In this case, the VIU may authorize to call the vehicle door unlocking service. If one of the signatures misses or the verification fails, the trust condition verification fails, and the VIU feeds back access control rejection information to the in-vehicle computing platform through the SOME/IP.

In the SOME/IP information, different access control results are distinguished based on status codes included in the payload. When the trust condition verification fails, if a security level of an in-vehicle service cannot be modified, an IAM in the VIU lowers a stored default trust level of the control processing application on the in-vehicle computing platform, for example, lowers a default trust level 1 to a trust level 0, and adjusts a default trusted state to an untrusted state. In addition, the in-vehicle computing platform learns, based on the fed-back status code, that the trust condition verification fails. In this case, the control processing application needs to provide an additional trust condition, for example, application/service running-state control flow information, trusted user interaction based on a hypervisor (virtual machine monitor) signature, and platform security status information. It should be noted that the platform security status information is provided by an intrusion detection system, and the VIU may synchronize the information via the PIP module. If the security level of the in-vehicle service can be modified, the in-vehicle computing platform may forcibly to restart the control processing application or lower the security level of the control processing application based on the fed-back status code. After the security level of the control processing application is lowered from 4 to 3, the service cannot be normally called because the security level is lower than that of the vehicle door unlocking service.

It should be noted that, in an AUTOSAR classic platform (classic platform, CP) architecture, the ECU may convert, into a service, a signal of another device connected through a local controller area network (controller area network, CAN) bus, and serve as a local gateway for another AUTOSAR AP platform for calling. Therefore, a service access method provided in this application may also be applied to a service system of the AUTOSAR CP platform.

In this embodiment, the service access method is applied to the intelligent connected vehicle with the three-domain architecture. Based on the security level and the service type, only the basic policy needs to be set in the access control module, to meet an update requirement on an access control policy in the SOA architecture. The check and feedback of the trust condition can prevent attacks such as spoofing and hijacking on the call chain and prevent the attack from spreading.

It may be understood that the foregoing embodiment is mainly applied to a vehicle environment. A focus of the service access method provided in this application is that a service type is fixed in an application scenario based on the SOA architecture, and a security level and a service type can be predefined for a service in the application scenario. Therefore, the service access method provided in this application is also applicable to an internet of things environment that is based on a service architecture and in which a service type is fixed.

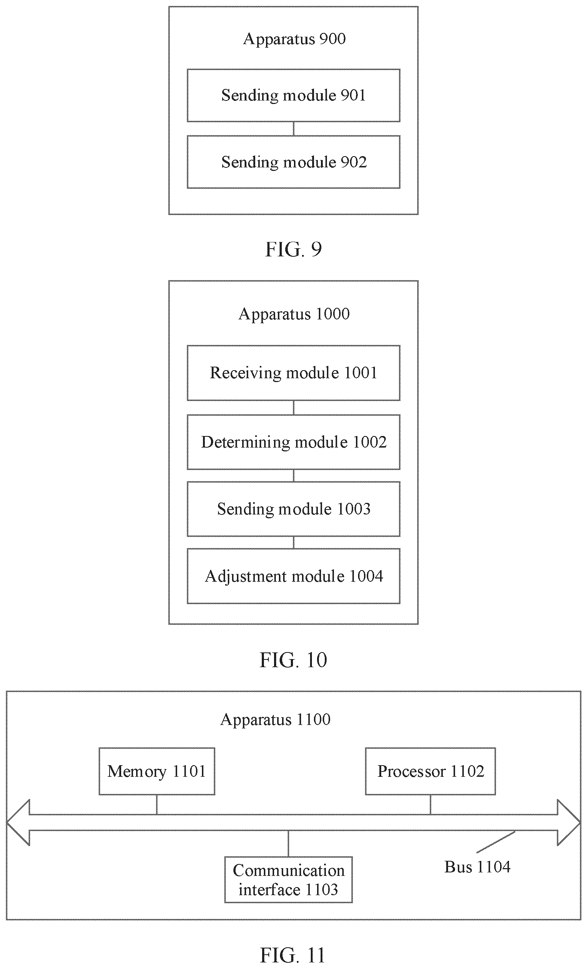

FIG. 9 is a diagram of a structure of a service access apparatus according to an embodiment of this application. As shown in FIG. 9, the apparatus 900 in this embodiment may include: a sending module 901, a receiving module 902, and an adjustment module 903.

The sending module 901 is configured to send a first access request to a first service party, where the first access request indicates that the second service requests to access a first service and indicates a security level of the second service, and the first service is deployed on the second service party.

Optionally, the receiving module 902 is configured to receive first information from the first service party, where the first information indicates the sending module 901 to add, when the sending module 901 resends the first access request, information required for verifying a second trust condition, and the second trust condition includes: a check report of a running-state control flow is trusted. The adjustment module 903 is configured to add, based on the first information, the information required for verifying the second trust condition when the sending module 901 resends the first access request.

Optionally, the receiving module 902 is further configured to receive second information from the first service party, where the second information indicates the adjustment module 903 to restart the second service or lower the security level of the second service. The adjustment module 903 is further configured to restart the second service or lower the security level of the second service based on the second information.

FIG. 10 is a diagram of a structure of a service access apparatus according to another embodiment of this application. As shown in 10, the apparatus 1000 in this embodiment may include: a receiving module 1001, a determining module 1002, a sending module 1003, and an adjustment module 1004.

The receiving module 1001 is configured to receive a first access request from a second service party, where the first access request indicates that a second service requests to access the first service and indicates a security level of the second service, and the second service is deployed on the second service party. The determining module 1002 is configured to: when determining, based on the first access request, that the second service and the first service meet a preset secure service access condition, allow the second service to access the first service, where the secure service access condition includes: a security level of a service access party is higher than or equal to a security level of a service provider.

Optionally, the secure service access condition further includes a first trust condition associated with the second service, the first trust condition includes: one or more services in a call chain in which the second service accesses the first service are trusted, and the service in the call chain includes the first service, the second service, and/or a third service.

Optionally, the sending module 1003 is configured to: when the second service does not meet the first trust condition, send first information to a second service party, where the first information indicates the second service party to add, when the second service party resends the first access request, information required for verifying a second trust condition, and the second trust condition includes: a check report of a running-state control flow is trusted. The determining module 1002 is configured to add the second trust condition associated with the second service to the secure service access condition. The adjustment module 1004 is configured to lower a trust level of the second service based on the first information.

Optionally, the sending module 1003 is further configured to: when the second service does not meet the first trust condition, send second information to the second service party, where the second information indicates the second service party to restart the second service or lower the security level of the second service.

It should be understood that the apparatus 900 and the apparatus 1000 are implemented in a form of a function module. The term "module" may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 900 and the apparatus 1000 have functions of implementing corresponding procedures and/or steps in the foregoing method embodiments. The foregoing functions may be implemented by hardware, or may be implemented by hardware by executing corresponding software. The hardware or the software includes one or more modules corresponding to the function.

FIG. 11 is a diagram of a structure of a service access apparatus according to still another embodiment of this application. The apparatus 1100 shown in FIG. 11 may be configured to perform the method performed by the service access apparatus in any one of the foregoing methods.

As shown in FIG. 11, the apparatus 1100 in this embodiment includes a memory 1101, a processor 1102, a communication interface 1103, and a bus 1104. The memory 1101, the processor 1102, and the communication interface 1103 implement communication connections between each other through the bus 1104.

The memory 1101 may be a read-only memory (read only memory, ROM), a static storage device, a dynamic storage device, or a random access memory (random access memory, RAM). The memory 1101 may store a program. When the program stored in the memory 1101 is executed by the processor 1102, the processor 1102 is configured to perform any one of the foregoing methods.

The processor 1102 may be a general-purpose central processing unit (central processing unit, CPU), a microprocessor, an application-specific integrated circuit, or one or more integrated circuits, and is configured to execute a related program.

The processor 1102 may be an integrated circuit chip and has a signal processing capability. In an implementation process, the related steps in embodiments of this application may be completed by using an integrated logic circuit of hardware in the processor 1102, or instructions in a form of software.

The processor 1102 may alternatively be a general-purpose processor, a digital signal processor (digital signal processing, DSP), an application-specific integrated circuit (ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1101. The processor 1102 reads information in the memory 901, and completes, in combination with hardware of the processor 1102, functions that need to be performed by units included in the apparatus in this application.

The communication interface 1103 may use, but not limited to, a transceiver apparatus of a transceiver type, to implement communication between the apparatus 1100 and another device or an apparatus.

The bus 1104 may include a path for transferring information between components (for example, the memory 1101, the processor 1102, and the communication interface 1103) of the apparatus 1100.

An embodiment of this application further provides a vehicle. The service access apparatus in the foregoing embodiment is mounted inside the vehicle.

An embodiment of this application further provides a computer-readable storage medium. The computer-readable storage medium stores computer instructions. When executing the computer instructions, a processor implements the steps in the methods in the foregoing embodiments.

An embodiment of this application further provides a computer program product, including computer instructions. When the computer instructions are executed by a processor, the steps in the methods in the foregoing embodiments are implemented.

It should be noted that the modules or components shown in the foregoing embodiments may be one or more integrated circuits configured to implement the foregoing methods, for example, one or more application-specific integrated circuits, one or more microprocessors, or one or more field programmable gate arrays. For another example, when the foregoing module is implemented in a form in which the processing element calls program code, the processing element may be a general-purpose processor, for example, a central processing unit or another processor that can call program code, for example, a controller. For another example, the modules may be integrated together and implemented in a form of system-on-a-chip (system-on-a-chip, SOC).

All or some of the foregoing embodiments may be implemented by using software, hardware, firmware, software modules or any combination thereof. When software is used to implement the embodiments, the embodiments may be implemented entirely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-state Drive, SSD)), or the like.

A person skilled in the art can easily figure out another implementation solution of this application after considering this specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and the embodiments are merely considered as examples, and the actual scope and the spirit of this application are pointed out by the following claims.

It should be understood that this application is not limited to the accurate structures that are described in the foregoing and that are shown in the accompanying drawings, and modifications and changes may be made without departing from the scope of this application. The scope of this application is limited only by the appended claims.

## Claims

1. A service access method, wherein the service access method is applied to a first service party, a first service is deployed on the first service party, and the method comprises:
receiving, by the first service party, a first access request from a second service party, wherein the first access request indicates that a second service requests to access the first service and indicates a security level of the second service, and the second service is deployed on the second service party; and
when determining, based on the first access request, that the second service and the first service meet a preset secure service access condition, allowing, by the first service party, the second service to access the first service, wherein the secure service access condition comprises: a security level of a service access party is higher than or equal to a security level of a service provider.

2. The method according to claim 1, wherein the secure service access condition further comprises a first trust condition associated with the second service, the first trust condition comprises: one or more services in a call chain in which the second service accesses the first service are trusted, and the service in the call chain comprises the first service, the second service, and/or a third service.

3. The method according to claim 2, wherein the first access request carries signature information of the service; and
that the service is trusted comprises: verification of the signature information of the service succeeds.

4. The method according to claim 2 or 3, wherein the method further comprises:
when the second service does not meet the first trust condition, adding, by the first service party, a second trust condition associated with the second service to the secure service access condition, and lowering a trust level of the second service, wherein the second trust condition comprises: a check report of a running-state control flow is trusted; and
sending, by the first service party, first information to the second service party, wherein the first information indicates the second service party to add, when the second service party resends the first access request, information required for verifying the second trust condition.

5. The method according to claim 2 or 3, wherein the method further comprises:
when the second service does not meet the first trust condition, sending, by the first service party, second information to the second service party, wherein the second information indicates the second service party to restart the second service or lower the security level of the second service.

6. The method according to any one of claims 1 to 5, wherein the first access request further indicates a service type of the second service, and the secure service access condition further comprises: a service type associated with the service provider comprises a service type associated with a service caller.

7. The method according to any one of claims 1 to 6, wherein the first access request further indicates an access type of the second service; and
the secure service access condition further comprises: an access type that is capable of being provided by the service provider for the service access party comprises an access type requested by the service access party.

8. A service access method, wherein the service access method is applied to a second service party, a second service is deployed on the second service party, and the method comprises:
sending, by the second service party, a first access request to a first service party, wherein the first access request indicates that the second service requests to access a first service and indicates a security level of the second service, and the first service is deployed on the second service party.

9. The method according to claim 8, wherein the first access request carries signature information of the second service.

10. The method according to claim 9, wherein the method further comprises:
receiving, by the second service party, first information from the first service party, wherein the first information indicates the second service party to add, when the second service party resends the first access request, information required for verifying a second trust condition, and the second trust condition comprises: a check report of a running-state control flow is trusted.

11. The method according to claim 9, wherein the method further comprises:
receiving, by the second service party, second information from the first service party, wherein the second information indicates the second service party to restart the second service or lower the security level of the second service.

12. The method according to any one of claims 9 to 11, wherein the first access request further indicates a service type of the second service.

13. The method according to any one of claims 9 to 12, wherein the first access request further indicates an access type of the second service.

14. A service access apparatus, wherein the service access apparatus is configured to implement the service access method according to any one of claims 1 to 7 or any one of claims 8 to 13.

15. A vehicle, wherein the vehicle comprises the service access apparatus according to claim 14.

16. A computer-readable storage medium, wherein the computer-readable storage medium stores computer-executable instructions, and when the computer-executable instructions are executed by a processor, the service access method according to any one of claims 1 to 7 or any one of claims 8 to 13 is implemented.

17. A computer program product, comprising a computer program, wherein when the computer program is executed by a processor, the service access method according to any one of claims 1 to 7 or any one of claims 8 to 13 is implemented.
